# EUROPÄISCHE PATENTSCHRIFT

(11) **EP 0 479 764 B1**
(45) Veröffentlichungstag und Bekanntmachung des Hinweises auf die Patenterteilung: **08.12.1993**
(21) Anmeldenummer: 91890224.8
(22) Anmeldetag: 24.09.1991
(51) Int. Cl.: B60M 1/28

(54) **Maschine zur Kontrolle des Fahrdrahtes einer Oberleitung**
Machine for the control of catenary wire
Machine pour le contrôle du fil de contact d'un caténaire

(30) Priorität: 03.10.1990 AT 1996/90; 01.03.1991 AT 435/91
(43) Veröffentlichungstag der Anmeldung: 08.04.1992
(73) Patentinhaber: Franz Plasser Bahnbaumaschinen- Industriegesellschaft m.b.H., 1010 Wien (AT)
(72) Erfinder: Theurer, Josef, A-1010 Wien (AT); Gruber, Leopold Rudolf, A-3270 Scheibbs (AT)

(56) Entgegenhaltungen:
- EP-A- 0 189 621
- DE-A- 2 526 417
- FR-A- 2 612 134

## Beschreibung

Die Erfindung betrifft eine Maschine zur Kontrolle des Fahrdrahtes einer Oberleitung, mit einem auf Schienen eines Gleises abrollbare Schienenfahrwerke, einen Fahrantrieb sowie einen höhenverstellbaren Meßbügel aufweisenden Maschinenrahmen mit einem Wagenkasten.

Die Instandhaltung des Eisenbahnfahrweges erfordert, daß - ebenso wie der Gleiskörper - auch die Oberleitung in angemessenen Zeitabständen kontrolliert, gewartet und im Bedarfsfall wieder instandgesetzt wird. Einhergehend mit der Steigerung der Fahrgeschwindigkeit elektrisch betriebener Züge wächst auch die Bedeutung, die einer genauen Einhaltung der Soll-Lage des Fahrdrahtes zukommt. Maschinen zur Durchführung der notwendigen Kontrollen des Fahrdrahtes von Oberleitungen sind in der Praxis in Form von sogenannten Motor-Turmwagen bekannt. Diese sind in der Regel mittels eines eigenen Fahrantriebes über Schienenfahrwerke auf den Schienen eines Gleises abrollbar und mit einem als Pantograph ausgebildeten Meßbügel ausgestattet. Dieser ist auf einem am Maschinenrahmen abgestützten Wagenkasten des Motor-Turmwagens befestigt und der Höhe nach verstellbar ausgebildet. Während der Meßfahrt wird über den Bügel die Höhe des Fahrdrahtes elektronisch erfaßt und aufgezeichnet bzw. auf einem Arbeitsschreiber graphisch dargestellt.

Derartige Maschinen haben sich im Einsatz bereits bewährt; es besteht jedoch immer das Problem, daß das Ergebnis der Höhenmessung des Fahrdrahtes unter gewissen Umständen dadurch beeinflußt bzw. verfälscht wird, daß sich der Abstand zwischen Wagenkasten und Schienenoberkante auf Grund der Fahrwerksfederung verändert.

Die Aufgabe der vorliegenden Erfindung liegt daher in der Schaffung einer Maschine der eingangs genannten Art, mittels derer eine zuverlässigere und insbesondere genauere Höhenkontrolle des Fahrdrahtes einer Oberleitung unter den verschiedensten Einsatzbedingungen gewährleistet ist.

Diese Aufgabe wird erfindungsgemäß dadurch gelöst, daß am Maschinenrahmen bzw. Wagenkasten ein Meßrahmen höhenverstellbar gelagert ist, dessen unterer Endbereich zur Auflage auf einer Achse des Schienenfahrwerkes bzw. direkt auf der Schienenfahrfläche einer durch das Schienenfahrwerk befahrenen Schiene ausgebildet ist, wobei der obere Endbereich des Meßrahmens mit einer Meßeinrichtung für die Höhenlage des Fahrdrahtes verbunden ist.

Der besondere Vorteil dieser Anordnung liegt darin, daß der Meßrahmen auf Grund seiner Lagerung an der Achse bzw. unmittelbar auf der Schienenfahrfläche dazu geeignet ist, den Abstand des Fahrdrahtes von der Schienenoberkante - quasi unter "Umgehung" der Fahrwerksfederung - genau und vor allem direkt zu messen. Da der Meßrahmen mit dem Maschinenrahmen nicht fest verbunden, sondern nur höhenverstellbar an diesem geführt ist, kann eine Einflußnahme des Maschinenrahmens auf die Genauigkeit der Messung - z.B. auf Grund einer Schwerpunktverlagerung in einem überhöhten Gleisbogen und dadurch bedingten Schräglage der Maschine bezüglich der Gleisebene - zuverlässig ausgeschlossen werden.

Die Ausgestaltung gemäß Anspruch 2 gewährleistet, daß dem Meßrahmen eine Meßbasis als Ausgangspunkt die Höhenlagemessung des Fahrdrahtes zugeordnet ist, deren Abstand von der Schienenoberkante immer konstant bleibt und die daher einen zuverlässigen Bezugspunkt für die Messung bildet.

Die Ausbildung nach Anspruch 3 ermöglicht problemlos die in Gleisbögen erfolgende Relativverschiebung der mit der Schienenfahrwerksachse verbundenen Auflagerplatte zum Meßrahmen, der infolge seiner Lagerung am Maschinenrahmen mit diesem in Gleisquerrichtung verschoben wird.

Die in Anspruch 4 beschriebene Anordnung bietet den besonderen Vorteil, daß durch Längenveränderung der Führungsstangen anhand des Gewindes die durch die Radabnützung bewirkte Höhendifferenz ausgeglichen werden kann.

Durch die konstruktive Ausbildung des Meßrahmens nach Anspruch 5 wird in vorteilhafter Weiste verhindert, daß es auf Grund einseitiger Einfederungen des Wagenkastens zu einer Verspannung bzw. Verbiegung des daran geführten Meßrahmens kommen kann. Es wird dadurch auch die fortwährende Auflage beider mit Rollen ausgestatteter Führungsstangen gewährleistet.

Mit der Ausgestaltung nach Anspruch 6 ist während der Montage der Oberleitung eine problemlose, einfach durchführbare und genau ablesbare Messung der Höhenlage des Fahrdrahtes gesichert, wobei durch die Querverschiebbarkeit der Halterung eine Anpassung an den Zickzack-Verlauf des Fahrdrahtes möglich ist.

Mit der in Anspruch 7 angeführten Ausbildung läßt sich in vorteilhafter Weise im Zuge einer kontinuierlichen Meßfahrt die Höhenlage des Fahrdrahtes der Oberleitung in seiner gesamten Länge elektronisch erfassen und aufzeichnen bwz. können die ermittelten Daten an ein Terminal zum Ablesen durch eine Bedienungsperson weitergeleitet werden.

In einer weiteren Ausgestaltung der Erfindung ist der Meßrahmen zwischen den Spurkranzrädern des Schienenfahrwerkes mit einem auf einer Radachse gelagerten Achsgetriebe verbunden bzw. direkt auf der Radachse gelagert. Diese Ausgestaltung ermöglicht eine vereinfachte, bezüglich der Durchführung durch den Maschinenrahmen auf einen einzigen Bereich konzentrierbare und damit platzsparende Ausbildung des Meßrahmens. Dieser kann damit zur Vermeidung einer störenden Einflußnahme auf das Meßergebnis in Bezug auf die Maschinenquerrichtung mittig, beispielsweise unmittelbar im Anschluß an die schützende Stirnwand eines Wagenaufbaues, angeordnet werden. Infolge der direkten Lagerung des Achsgetriebes auf der Radachse ist eine exakte Höhenmessung zwischen Schienenoberkante und Fahrdraht der Oberleitung erzielbar.

Mit der verschwenkbaren Lagerung des Meßrahmens gemäß Anspruch 9 nehmen unvermeidbare, geringfügige Drehbewegungen des Achsgetriebes während des Anfahr- bzw. Abbremsvorganges der Maschine keinen Einfluß auf das Meßergebnis.

Die Weiterbildung gemäß Anspruch 10 ermöglicht eine rasche Verschiebung des Meßbalkens von einer Überstell- in eine den Fahrdraht der Oberleitung berührende Arbeitsposition.

Mit einer Weiterbildung nach Anspruch 11 sind durch die Erfassung der Distanzänderung zwischen der freien Längsseite der Meßleiste und dem Meßbalken eventuelle Höhenlagefehler des die Meßleiste berührenden Fahrdrahtes sofort feststellbar.

Die in Anspruch 12 beschriebene Ausgestaltung ermöglicht eine exakte und ununterbrochene Erfassung der Höhenlagefehler des Fahrdrahtes gegenüber der Schienenoberkante.

Eine Weiterbildung nach Anspruch 13 gewährleistet ein ständiges Nachrücken der Meßleiste in Abhängigkeit von den Höhenlagefehlern des Fahrdrahtes, so daß die Kontrolle der Höhenlage immer bei vorschriftsmäßigem Anpreßdruck eines Stromabnehmers an den Fahrdraht durchführbar ist.

Durch die Ausgestaltung nach Anspruch 14 ist eine Verdrehsicherung des Meßbalkens gewährleistet, so daß sich dieser in jeder Höhenposition in der korrekten Querlage befindet.

Mit der Weiterbildung nach Anspruch 15 ist eine vom gefederten Maschinenrahmen völlig unabhängige Relativbewegung in Maschinenquerrichtung entsprechend der Gleislage möglich.

Mit einer Höhenmeßleiste gemäß Anspruch 16 ist die jeweilige aktuelle Höhenlage des Fahrdrahtes jederzeit ablesbar.

Schließlich ermöglicht die in Anspruch 17 angeführte Lösung eine in Abhängigkeit von konstruktiven Gegebenheiten, insbesondere im Bereich der Radachse, angepaßte Abstützung des Meßrahmens auf der Radachse bzw. direkt auf den Schienen des Gleises, um jeweils die exakte Distanz zwischen Fahrdraht und Schienenoberkante messen zu können.

Nachfolgend wird die Erfindung an Hand von in der Zeichnung dargestellten Ausführungsbeispielen näher beschrieben.

Es zeigen:
Fig. 1 eine räumliche Teildarstellung einer erfindungsgemäß ausgebildeten Maschine mit einem Meßrahmen und einem Meßbügel zur Kontrolle des Fahrdrahtes einer Oberleitung,
Fig. 2 eine Seitenansicht des Meßbügels der Maschine gemäß Fig. 1,
Fig. 3 eine Seitenansicht des unteren Endbereiches eines Meßrahmens einer anderen Ausführungsform der Erfindung,
Fig. 4 eine schematisierte Seitenansicht der Meßbügelanordnung einer weiteren erfindungsgemäßen Ausführung der Maschine,
Fig. 5 eine Seitenansicht eines weiteren Ausführungsbeispieles einer als Motorturmwagen ausgebildeten Maschine mit einem höhenverstellbar gelagerten und an einem Achsgetriebe eines Schienenfahrwerkes befestigten Meßrahmen,
Fig. 6 eine vergrößerte Ansicht des Meßrahmens gemäß Pfeil VI in Fig. 5,
Fig. 7 eine vergrößerte Ansicht eines mit dem Meßrahmen verbundenen Meßbalkens zur Höhenkontrolle eines Fahrdrahtes,
Fig. 8 eine Seitenansicht des Meßbalkens gemäß Fig. 7 und
Fig. 9 und 10 jeweils eine schematische Darstellung eines weiteren Ausführungsbeispieles der Erfindung.

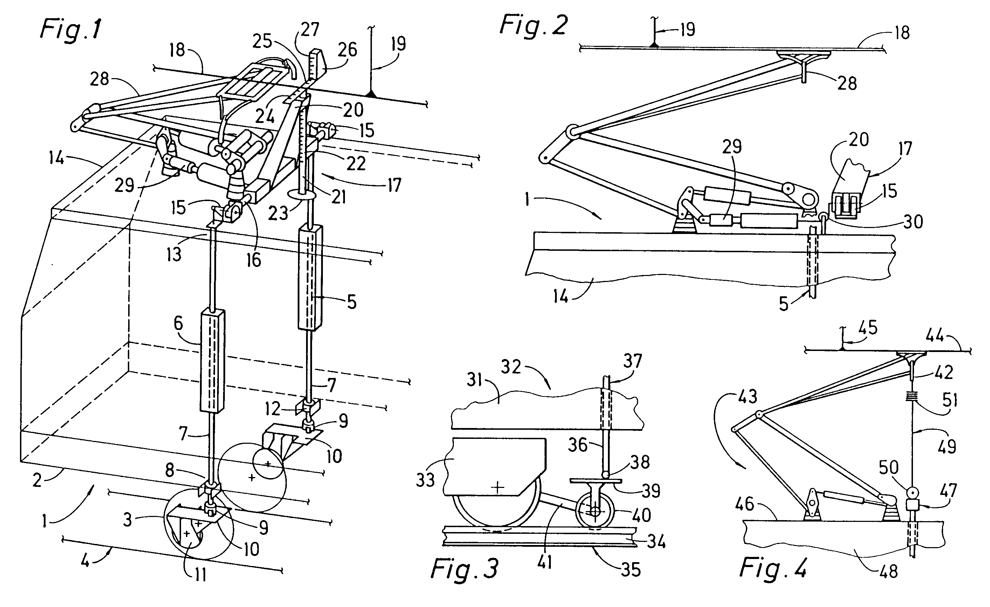

Eine in Fig. 1 zum Teil nur schematisch gezeigte Maschine 1 zur Kontrolle des Fahrdrahtes 18 einer Oberleitung 19 weist einen Maschinenrahmen 2 auf, der über Schienenfahrwerke 3 auf einem Gleis 4 mittels eines (nicht dargestellten) Fahrantriebes verfahrbar ist. Am Maschinenrahmen 2 bzw. an einem Wagenkasten 14 ist ein Meßrahmen 5 höhenverstellbar angeordnet, welcher zwei in Maschinenquerrichtung voneinander distanzierte und in vertikalen Führungen 6 gelagerte Führungsstangen 7 aufweist. Im unteren Endbereich 8 des Meßrahmens 5 sind die Führungsstangen 7 jeweils mit Rollen 9 versehen, welche zur Abstützung auf horizontalen bzw. zur Gleisebene parallelen Auflagerplatten 10 dienen. Letztere sind jeweils mit einem Achslagergehäuse 11 des Schienenfahrwerkes 3 verbunden und sind größenmäßig so ausgebildet, daß bei der in Gleisbögen erfolgenden relativen Querverschiebung des Schienenfahrwerkes 3 zum Maschinenrahmen 2 auch noch bei engsten Gleisbögen die sichere Abstützung der Rollen 9 gewährleistet bleibt. Jede Führungsstange 7 ist aus zwei Teilen gebildet, welche zur Längenveränderung der Führungsstange 7 mittels eines Gewindes 12 miteinander verbunden sind. Dadurch kann die aus der Schienenradabnützung resultierende Verkleinerung des Raddurchmessers und damit zusammenhängende Absenkung der Auflagerplatten 10 individuell ausgeglichen werden.

Im oberen Endbereich 13 des Meßrahmens 5 erstrecken sich die Führungsstangen 7 bis außerhalb bzw. oberhalb des Wagenkastens 14 der Maschine 1 und sind in diesem Bereich jeweils über ein Gelenk 15 mit einem Distanzglied 16 verbunden, welches in Maschinenquerrichtung verläuft und eine Meßeinrichtung 17 zum Messen der Höhenlage des Fahrdrahtes 18 der Oberleitung 19 trägt. Durch die gelenkige Verbindung der Führungsstangen 7 mittels des Distanzgliedes 16 wird verhindert, daß auf Grund einer einseitigen Einfederung des Wagenkastens 14 unzulässige Biegebeanspruchungen des Meßrahmens 5 auftreten.

Die mit dem Distanzglied 16 verbundene Meßeinrichtung 17 weist einen A-förmigen Rahmen 20 auf, an dem etwa in Gleismitte eine vertikale Gewindespindel 21 angeordnet ist. Letztere ist mit einer Höhenskala 22 sowie an ihrem unteren Ende mit einem Handrad 23 versehen und kann damit der Höhe nach zum Meßrahmen 5 verstellt werden. Am oberen Ende der Gewindespindel 21 ist eine in Maschinenquerrichtung verlaufende und eine Skala 25 aufweisende horizontale Gleitleiste 24 befestigt. Darauf ist eine Halterung 26 verschiebbar gelagert, die eine weitere Höhenskala 27 trägt.

Wie in Fig. 1 und noch genauer in Fig. 2 zu ersehen, ist ein höhenverstellbarer Meßbügel 28 im Dachbereich des Wagenkastens 14 an der Maschine 1 angeordnet und zur Anlage an den Fahrdraht 18 vorgesehen. Zum Messen der Höhenlage des Fahrdrahtes 18 im Zuge einer Meßfahrt ist der Meßbügel 28 mit dem Meßrahmen 5 durch einen elektronischen Weggeber 29 verbunden. Hierbei bildet der Meßrahmen 5 auf Grund seiner Lagerung direkt am Schienenfahrwerk 3 - unter Umgehung der Federung des Wagenkastens 14 - eine absolut verläßliche und vor allem konstante Referenzbasis für besagte Messung des Abstandes zwischen Fahrdraht 18 und Schienenoberkante. Da jedoch der Meßbügel 28 mit dem Wagenkasten 14 verbunden ist und somit etwaige vertikale Bewegungen des Wagenkastens in seiner Federung vom Weggeber 29 miterfaßt und fälschlicherweise dem Ergebnis der Fahrdrahthöhenmessung zugerechnet werden könnten, erfolgt die Verbindung des Weggebers 29 mit dem Meßrahmen 5 durch ein Seil, das um ein Umlenkorgan 30 geführt ist. Das Umlenkorgan 30 ist als drehbare Rolle ausgebildet sowie am Wagenkasten 14 befestigt und gleicht etwaige vertikale Bewegungen des Wagenkastens 14 gegenüber dem Meßrahmen 5 aus.

Fig. 3 stellt eine Variante der Erfindung dar, bei der ein Maschinenrahmen 31 einer Maschine 32 zur Kontrolle des Fahrdrahtes einer Oberleitung über ein Schienenfahrwerk 33 auf den Schienen 34 eines Gleises 35 verfahrbar ist. Eine vertikale Führungsstange 36 eines Meßrahmens 37 ist am Maschinenrahmen 31 höhenverstellbar geführt und stützt sich mit ihrem unteren Ende 38 auf einer horizontalen Auflagerplatte 39 auf bzw. ist zu dieser in horizontaler Richtung verstellbar. Die Auflagerplatte 39 ist ihrerseits über ein Spurkranzrad 40 direkt auf der Schiene 34 abgestützt bzw. abrollbar und weiters mittels einer Spurstange 41 am Schienenfahrwerk 33 angelenkt. Somit bildet die Auflagerplatte 39 eine konstante, zuverlässige Meßbasis für die im oberen Endbereich des Meßrahmens 37 angeordnete (hier nicht gezeigte) Meßeinrichtung, die ähnlich wie die in Fig. 1 dargestellte Meßeinrichtung ausgebildet ist.

In Fig. 4 ist schließlich noch eine weitere mögliche Ausgestaltung der Erfindung zu sehen. Ein höhenverstellbarer Meßbügel 42 einer Maschine 43 zur Kontrolle des Fahrdrahtes 44 einer Oberleitung 45 ist im oberen Endbereich eines Wagenkastens 46 angeordnet. Ein Meßrahmen 47 ist höhenverstellbar am Maschinenrahmen 48 der Maschine 43 geführt und in seinem oberem Endbereich zur Bildung einer Meßeinrichtung 49 mit einem Meßwertgeber in Form eines Drehpotentiometers 50 versehen, welches unter Zwischenschaltung eines Isolators 51 mit dem Meßbügel 42 verbunden ist. Jede Änderung in der Höhe des Fahrdrahtes 44 ist somit auf direktem Wege meßbar.

Der Arbeitseinsatz der erfindungsgemäß ausgestatteten Maschine erfolgt einerseits bei der Neu-Installation bzw. Reparatur des Fahrdrahtes einer Oberleitung und andereseits im Zuge kontinuierlicher Meßfahrten zur Kontrolle bereits im Einsatz befindlicher Oberleitungen. Im ersten Fall kommen die verschiedenen, am Rahmen 20 angeordneten Meßskalen - bei Stillstand der Maschine 1 zur Anwendung, die vom Gleisbaupersonal bei der Montage des Fahrdrahtes 18 zur Feststellung der korrekten Soll-Lage der Oberleitung 19 herangezogen werden. Im zweiten Fall sind die Meßskalen nicht im Einsatz; die Fahrdrahthöhenmessung erfolgt über den Meßbügel 28, wobei eine in der Maschine 1 befindliche Bedienungsperson an Hand von am Bügel angebrachten Markierungen zusätzlich visuell den Zickzack-Verlauf des Fahrdrahtes 18 kontrollieren kann.

Es sind darüber hinaus noch weitere Möglichkeiten der Höhenmessung eines Fahrdrahtes im Rahmen der vorliegenden Erfindung anwendbar. So könnte z.B. die Erfassung der Lage des Fahrdrahtes berührungslos auf optoelektronischem Wege mittels einer Lichtschrankenanordnung erfolgen. Möglich ist auch der Einsatz von induktiven Näherungsschaltern zur berührungslosen Messung.

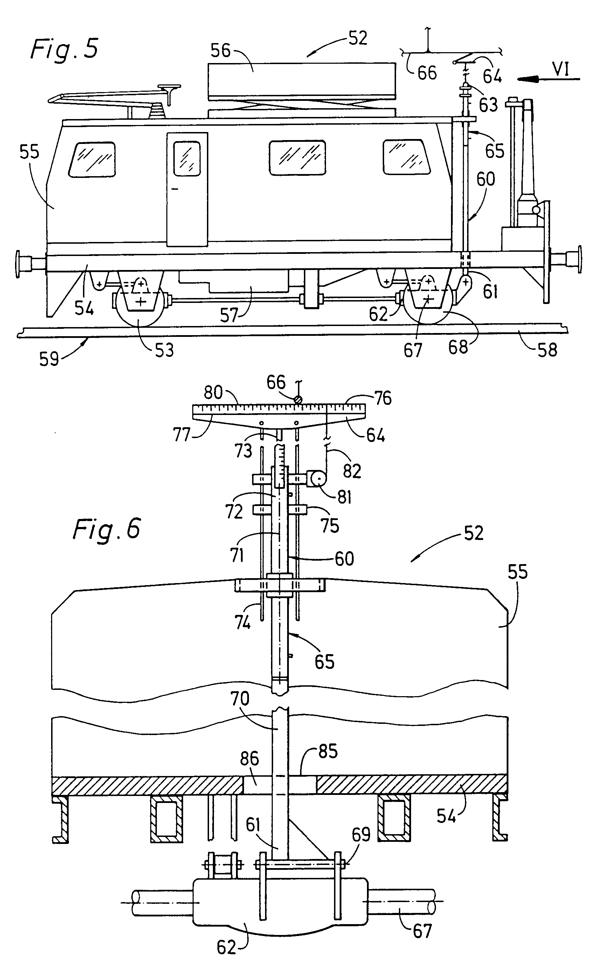

Eine in Fig. 5 ersichtliche, als Motorturmwagen ausgebildete Maschine 52 besteht aus einem auf Schienenfahrwerken 53 abgestützten Maschinenrahmen 54, der mit einem Wagenaufbau 55 verbunden ist. Auf diesem befindet sich eine durch Antriebe höhenverstell- und drehbare Hebebühne 56. Ein Fahrantrieb 57 dient zum Verfahren der Maschine 52 auf einem aus Schwellen und Schienen 58 gebildeten Gleis 59. Außerhalb des Wagenaufbaues 55 ist ein bezüglich der Maschinenquerrichtung mittig angeordneter Meßrahmen 60 vorgesehen, dessen unteres Ende 61 mit einem Achsgetriebe 62 verbunden ist. Ein oberes Ende 63 des Meßrahmens 60 ist mit einer Meßeinrichtung für die Kontrolle der Höhenlage eine Fahrdrahtes 66 verbunden. Diese Meßeinrichtung weist einen Meßbalken 64 auf, der durch einen Antrieb 65 höhenverstellbar ist. Das Achsgetriebe 62 ist auf einer Radachse 67 zweier Spurkranzräder 68 des Schienenfahrwerkes 53 gelagert.

Wie in Fig. 6 ersichtlich, ist das untere Ende 61 des Meßrahmens 60 durch eine quer zur Maschienenlängsrichtung verlaufende Achse 69 drehbar mit dem Achsgetriebe 62 verbunden. Der Meßrahmen 60 setzt sich aus einem vertikalen Träger 70 und dem koaxial mit diesem verbundenen Antrieb 65 zusammen. Dieser weist einen mit seiner Längsachse 71 senkrecht zur Radachse 67 verlaufenden Hydraulikzylinder 72 sowie eine mit dem Meßbalken 64 verbundene Kolbenstange 73 auf. Der parallel zur Radachse 67 und quer zur Maschinenlängsrichtung verlaufende Meßbalken 64 ist mit zwei parallel zur Längsachse 71 verlaufenden Führungsstangen 74 verbunden, die in einem am Hydraulikzylinder 72 befestigten Führungsblock 75 höhenverstellbar gelagert sind. Der Meßrahmen 60 ist im Bereich des Maschinenrahmens 54 durch eine Öffnung 85 hindurchgeführt, die zwei parallel zueinander und quer zur Maschinenlängsrichtung verlaufende Führungsleisten 86 zur spielfreien Anlage des Meßrahmens 60 aufweist. Dabei ist die quer zur Maschinenlängsrichtung verlaufende Breite der Öffnung 85 größer als die entsprechende Breite des Meßrahmens 60 ausgebildet. Mit 87 ist eine ähnliche, am Wagenaufbau befestigte Höhenführung für den Meßrahmen 60 bezeichnet.

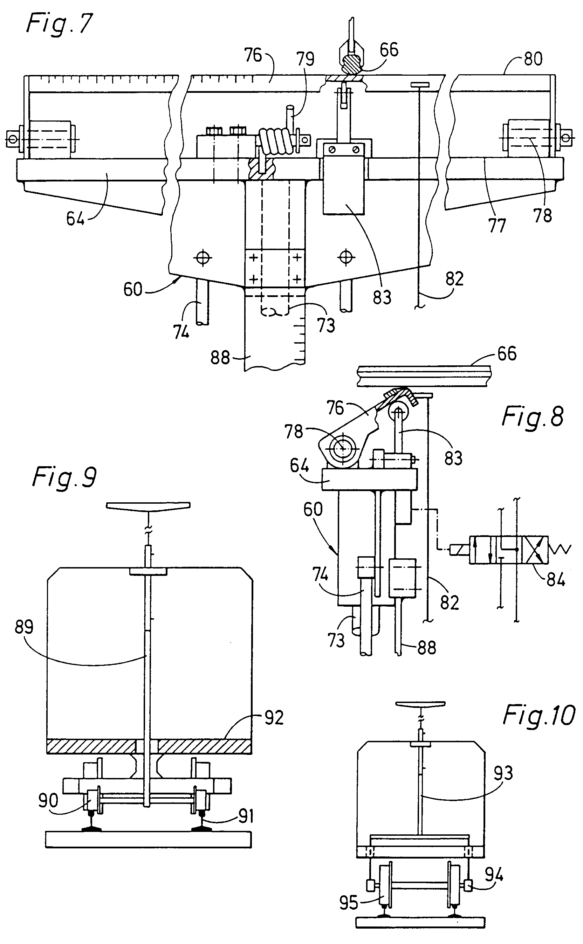

Wie in Fig. 7 ersichtlich, ist das obere Ende des Meßbalkens 64 mit einer quer zur Maschinenlängsrichtung verlaufenden Meßleiste 76 verbunden, die an einer ersten Längsseite 77 um eine parallel zur Radachse 67 und quer zur Maschinenlängsrichtung verlaufende Achse 78 verschwenkbar gelagert ist. Zwischen Meßbalken 64 und der Meßleiste 76 ist eine Schraubenfeder 79 zum Abdrücken einer zweiten Längsseite 80 der Meßleiste 76 vorgesehen. Diese zweite, der Achse 78 gegenüberliegende Längsseite 80 ist mit einem am Antrieb 65 befestigten Wegmeßgeber 81 verbunden. Die Verbindung mit dem als Drehpotentiometer ausgebildeten Wegmeßgeber 81 erfolgt durch ein parallel zur Längsachse 71 des Antriebes 65 verlaufendes Seil 82.

Wie in Fig. 7 und 8 ersichtlich, ist zwischen Meßbalken 64 und der Meßleiste 76 ein Endschalter 83 angeordnet, der zur Steuerung eines zur Beaufschlagung des Antriebes 65 dienenden Hydraulikventils 84 ausgebildet ist. Der Meßbalken 64 ist mit einer senkrecht zur Radachse 67 verlaufenden, eine Längenmaßeinteilung aufweisenden Höhenmeßleiste 88 verbunden.

Zur Durchführung der Höhenlagekontrolle des Fahrdrahtes 66 wird der Meßrahmen 60 unter Beaufschlagung des Antriebes 65 so lange hochgefahren, bis die Meßleiste 76 an den Fahrdraht 66 angedrückt wird. Sowohl der Endschalter 83 als auch die Schraubenfeder 79 sind derart aufeinander eingestellt, daß bei einer durch die Schraubenfeder 79 verursachten vorschriftsmäßigen Anpreßkraft von z.B. 1 kp der Endschalter 83 die Beaufschlagung des Antriebes 65 unterbricht. Durch die Höhenmeßleiste 88 ist nunmehr jederzeit die aktuelle Distanz zwischen dem Fahrdraht 66 im Bereich der Meßleiste 76 und der Schienenoberkante ablesbar. Durch den Wegmeßgeber 81 wird diese Höhe auch in ein elektrisches Signal umgewandelt und kann gegebenenfalls auch digital angezeigt werden.

Im folgenden wird die Maschine 52 kontinuierlich am Gleis 59 verfahren. Sobald es nun infolge eines Höhenlagefehlers des Fahrdrahtes 66 zu einer Verdrehung der Meßleiste 76 um die Achse 78 kommt, wird durch den diese Änderung ebenfalls registrierenden Endschalter 83 durch Beaufschlagung des Antriebes 65 eine entsprechende Nachsteuerung durchgeführt, so daß praktisch die Distanz zwischen Meßbalken 64 und Fahrdraht 66 im wesentlichen konstant bleibt. Die durch die Nachsteuerung bewirkte Änderung der Höhenlage des Meßbalkens 64 relativ zum Wegmeßgeber 81 bzw. zur Schienenoberkante wird von diesem registriert und entsprechend angezeigt. Diese permanente Nachsteuerung des Meßbalkens 64 mitsamt der Meßleiste 76 hat den Vorteil, daß damit - unabhängig von den Höhenlagefehlern des Fahrdrahtes 66 - immer der gleiche gewünschte Anpreßdruck der Meßleiste 76 an den Fahrdraht 66 gewährleistet ist. Damit ist sichergestellt, daß die Höhenlagekontrolle immer unter jenen Bedingungen erfolgt, die bei einem Anliegen eines Stromabnehmers mit einem vorschriftsmäßigen Anpreßdruck vorherrschen.

In Fig. 9 ist ein schematisch dargestellter und in seiner Funktion dem in den Fig. 5 bis 8 beschriebenen Meßrahmen 60 ähnlicher Meßrahmen 89 ersichtlich, der in seinem unteren Endbereich Spurkranzrollen 90 zur direkten Auflage auf Schienen 91 eines Gleises verbunden ist. Ein Maschinenrahmen 92 ist durch Schienenfahrwerke auf den Schienen 91 verfahrbar.

Schließlich zeigt Fig. 10 noch eine weitere Variante eines Meßrahmens 93, der in seinem unteren Endbereich direkt auf einer Radachse bzw. auf den Achslagern 94 eines Schienenfahrwerkes 95 abgestützt ist.

## Patentansprüche

1. Maschine zur Kontrolle des Fahrdrahtes einer Oberleitung, mit einem auf Schienen eines Gleises abrollbare Schienenfahrwerke, einen Fahrantrieb sowie einen höhenverstellbaren Meßbügel aufweisenden Maschinenrahmen mit einem Wagenkasten, **dadurch** **gekennzeichnet**, daß am Maschinenrahmen (2) bzw. Wagenkasten (14) ein Meßrahmen (5) höhenverstellbar gelagert ist, dessen unterer Endbereich (8) zur Auflage auf einer Achse des Schienenfahrwerkes (3) bzw. direkt auf der Schienenfahrfläche einer durch das Schienenfahrwerk (33) befahrenen Schiene (34) ausgebildet ist, wobei der obere Endbereich (13) des Meßrahmens (5) mit einer Meßeinrichtung (17) für die Höhenlage des Fahrdrahtes (18) verbunden ist.

2. Maschine nach Anspruch 1, dadurch gekennzeichnet, daß der untere Endbereich (8) des Meßrahmens (5) auf einer mit dem Achslagergehäuse (11) verbundenen horizontalen bzw. zur Gleisebene parrallelen Auflagerplatte (10) aufliegt.

3. Maschine nach Anspruch 1 oder 2, dadurch gekennzeichnet, daß am unteren Endbereich (8) des Meßrahmens (5) Rollen (9) zur Abstützung auf der Auflagerplatte (10) vorgesehen sind.

4. Maschine nach einem der Ansprüche 1,2 oder 3, dadurch gekennzeichnet, daß der Meßrahmen (5) aus zwei in Maschinenquerrichtung voneinander distanzierten und höhenverstellbar gelagerten vetikalen Führungsstangen (7) gebildet ist, die jeweils aus zwei durch ein Gewinde (12) miteinander verbundenen Teilen gebildet sind.

5. Maschine nach einem der Ansprüche 1 bis 4, dadurch gekennzeichnet, daß die beiden vertikalen Führungsstangen (7) des Meßrahmens (5) in ihrem oberen, außerhalb des Wagenkastens (14) befindlichen Endbereich (13) jeweils durch ein Gelenk (15) mit einem querverlaufenden und die Meßeinrichtung (17) aufweisenden Distanzglied (16) verbunden sind.

6. Maschine nach einem der Ansprüche 1 bis 5, dadurch gekennzeichnet, daß die im oberen Endbereich (13) des Meßrahmens (5) außerhalb des Wagenkastens (14) befindliche und mit dem Meßrahmen (5) verbundene Meßeinrichtung (17) eine vertikale, mit einem Handrad (23) und einer Höhenskala (22) verbundene Gewindespindel (21) aufweist, die mit einer horizontalen und quer zur Maschinenlängsrichtung verlaufenden und mit einer Skala (25) versehenen Gleitleiste (24) verbunden ist, auf der eine Halterung (26) mit einer vertikalen Höhenskala (27) verschiebbar gelagert ist.

7. Maschine nach einem der Ansprüche 1 bis 6, dadurch gekennzeichnet, daß zur Bildung der Meßeinrichtung (17;49) zwischen Meßrahmen (5;47) und dem Meßbügel (28;42) gegebenenfalls unter Zwischenschaltung von Isolatoren ein elektronischer Weggeber (29), beispielsweise in Form eines Drehpotentiometers (50) od.dgl., angeordnet ist.

8. Maschine nach Anspruch 1, dadurch gekennzeichnet, daß der Meßrahmen (60) zwischen den Spurkranzrädern (68) des Schienenfahrwerkes (53) mit einem auf einer Radachse (67) gelagerten Achsgetriebe (62) verbunden bzw. direkt auf der Radachse (67) gelagert ist.

9. Maschine nach Anspruch 8, dadurch gekennzeichnet, das das untere Ende des Meßrahmens (60) um eine quer zur Maschinenlängsrichtung verlaufende Achse (69) mit dem Achsgetriebe (62) verbunden ist.

10. Maschine nach Anspruch 8 oder 9, dadurch gekennzeichnet, daß das obere, einen parallel zur Radachse (67) und quer zur Maschinenlängsrichtung verlaufenden Meßbalken (64) aufweisende Ende des Meßrahmens (60) durch einen auf diesem befestigten Antrieb (65) gegenüber dem unteren Meßrahmenende (61) höhenverstellbar ausgebildet ist.

11. Maschine nach einem der Ansprüche 8 bis 10, dadurch gekennzeichnet, daß das obere Ende des Meßbalkens (64) mit einer Meßleiste (76) verbunden ist, die an einer ersten Längsseite (77) um eine parallel zur Radachse (67) und quer zur Maschinenlängsrichtung verlaufende Achse (78) verschwenkbar gelagert und zum Abdrücken einer zweiten Längsseite (80) der Meßleiste (76) vom Meßbalken (64) mit einer Schraubenfeder (79) verbunden ist.

12. Maschine nach einem der Ansprüche 8 bis 11, dadurch gekennzeichnet, daß die zweite, der Achse gegenüberliegende Längsseite (80) der Meßleiste (76) mit einem am Antrieb (65) befestigten Wegmeßgeber (81 ) verbunden ist.

13. Maschine nach einem der Ansprüche 8 bis 12, dadurch gekennzeichnet, daß zwischen Meßleiste (76) und Meßbalken (64) ein Endschalter (83) angeordnet ist, der zur Steuerung eines den Antrieb (65) beeinflussenden Hydraulikventils (84) ausgebildet ist.

14. Maschine nach einem der Ansprüche 8 bis 13, dadurch gekennzeichnet, daß der Meßbalken (64) mit wenigstens einer parallel zur Längsachse (71) des Antriebes (65) verlaufenden Führungsstange (74) verbunden ist, die in einem mit dem Hydraulikzylinder (72) des Antriebes (65) verbundenen Führungsblock (75) höhenverstellbar gelagert ist.

15. Maschine nach einem der Ansprüche 8 bis 14, dadurch gekennzeichnet, daß der Meßrahmen (60) durch eine Öffnung (85) des Maschinenrahmens (54) hindurchgeführt ist, die zwei parallel zueinander und quer zur Maschinenlängsrichtung verlaufende Führungsleisten (86) zur spielfreien Anlage des Meßrahmens (60) aufweist, wobei die quer zur Maschinenlängsrichtung verlaufende Breite der Öffnung (85) größer als die entsprechende Breite des Meßrahmens (60) ausgebildet ist.

16. Maschine nach einem der Ansprüche 8 bis 15, dadurch gekennzeichnet, daß der Meßbalken (64) mit einer senkrecht zur Radachse (67) verlaufenden, eine Längenmaßeinteilung aufweisenden Höhenmeßleiste (88) verbunden ist.

17. Maschine nach einem der Ansprüche 14 bis 16, dadurch gekennzeichnet, daß der Meßrahmen (89) in seinem unteren Endbereich mit Spurkranzrollen (90) zur Auflage auf den Schienen (91) eines durch die Schienenfahrwerke der Maschine befahrenen Gleises verbunden ist.

## Claims

1. A machine for checking the contact wire of an overhead contact line, comprising a machine frame equipped with on-track undercarriages designed to run along the rails of a track, a travelling drive and a vertically adjustable measuring yoke, and further comprising a wagon body, **characterized in that** a measuring frame (5) is mounted for vertical displacement on the machine frame (2) or the wagon body (14) respectively and, at its lower end area (8), is designed to be supported by an axle of the on-track undercarriage (3) or directly by the surface of a rail (34) along which the undercarriage (3) travels, the upper end area (13) of the measuring frame (5) being connected to an arrangement (17) for measuring the height of the contact wire (18).

2. A machine according to Claim 1, **characterized in that** the lower end area (8) of the measuring frame (5) is supported by a bearing plate (10) which is horizontal or parallel to the plane of the track and which is connected to the axle-bearing housing (11).

3. A machine according to Claim 1 or 2, **characterized in that** rollers (9) are provided at the lower end area (8) of the measuring frame (5) to support it on the bearing plate (10).

4. A machine according to one of Claims 1, 2 or 3, **characterized in that** the measuring frame (5) is formed by two vertical guide rods (7) which are mounted for vertical displacement at a distance from each other transversely of the machine and each of which consists of two parts joined together by a thread (12).

5. A machine according to one of Claims 1 to 4, **characterized in that,** at their upper end areas (13) situated outside the wagon body (14), the two vertical guide rods (7) of the measuring frame (5) are each connected by a coupling (15) to a transversely extending distance member (16) comprising the measuring arrangement (17).

6. A machine according to one of Claims 1 to 5, **characterized in that** the measuring arrangement (17), which is situated at the upper end area (13) of the measuring frame (5) outside the wagon body (14) and which is connected to the measuring frame (5), comprises a vertical threaded spindle (21) which is connected to a hand wheel (23) and a height scale (22) and to a horizontal slide bar (24), which is provided with a scale (25) and extends transversely of the longitudinal axis of the machine and on which a holder (26) with a vertical height scale (27) is mounted for displacement.

7. A machine according to one of Claims 1 to 6, **characterized in that** an electronic position sensor (29), for example in the form of a rotary potentiometer (50) or the like, is arranged between the measuring frame (5; 47) and the measuring yoke (28; 42), optionally with the interposition of insulators, to form the measuring arrangement (17; 49).

8. A machine according to Claim 1, **characterized in that,** between the flanged wheels (68) of the on-track undercarriage (53), the measuring frame (60) is connected to an axle drive (62) mounted on a wheel axle (67) or is directly mounted on the wheel axle (67).

9. A machine according to Claim 8, **characterized in that** the lower end of the measuring frame (60) is connected to the axle drive (62) about an axis (69) extending transversely of the longitudinal axis of the machine.

10. A machine according to Claim 8 or 9, **characterized in that** the upper end of the measuring frame (60), which comprises a measuring beam (64) extending parallel to the wheel axle (67) and transversely of the longitudinal axis of the machine, is designed for vertical displacement relative to the lower end (61) of the measuring frame under the power of a drive (65) fixed to the said measuring frame (60).

11. A machine according to one of Claims 8 to 10, **characterized in that** the upper end of the measuring beam (64) is connected to a measuring bar (76) which, on a first longitudinal side (77), is mounted to pivot about an axis (78) extending parallel to the wheel axle (67) and transversely of the longitudinal axis of the machine and is connected to a helical spring (79) to press down a second longitudinal side (80) of the measuring bar (76) from the measuring beam (64).

12. A machine according to one of Claims 8 to 11, **characterized in that** the second longitudinal side (80) - opposite the axis - of the measuring bar (76) is connected to a position sensor (81) fixed to the drive (65).

13. A machine according to one of Claims 8 to 12, **characterized in that** a limit switch (83), which is designed to control an hydraulic drive (84) controlling the drive (65), is arranged between the measuring bar (76) and the measuring beam (64).

14. A machine according to one of Claims 8 to 13, **characterized in that** the measuring beam (64) is connected to at least one guide rod (74) which extends parallel to the longitudinal axis (71) of the drive (65) and which is mounted for vertical displacement in a guide block (75) connected to the hydraulic cylinder (72) of the drive (65).

15. A machine according to one of Claims 8 to 14, **characterized in that** the measuring frame (60) is guided through an opening (85) in the machine frame (54) which comprises two guide bars (86) extending parallel to one another and transversely of the longitudinal axis of the machine for play-free abutment of the measuring frame (60), wherein the width of the opening (85) extending transversely of the longitudinal axis of the machine is greater than the corresponding width of the measuring frame (60).

16. A machine according to one of Claims 8 to 15, **characterized in that** the measuring beam (64) is connected to a length-graduated height measuring bar (88) extending perpendicularly of the wheel axle (67).

17. A machine according to one of Claims 14 to 16, **characterized in that,** in its lower end area, the measuring frame (89) is connected to flanged rollers (90) for abutment on the rails (91) of a track along which the on-track undercarriages of the machine travel.

## Revendications

1. Machine pour le contrôle du fil de contact d'une caténaire comprenant des trains de roulement sur rails pouvant rouler sur les rails d'une voie ferrée, un dispositif de locomotion ainsi qu'un châssis de machine présentant un étrier de mesure déplaçable en hauteur, avec une caisse de voiture, caractérisée en ce qu'un châssis de mesure (5) est installé de façon déplaçable en hauteur au châssis de machine (2) et à la caisse de voiture (14), respectivement, dont la zone d'extrémité inférieure (8) est réalisée pour reposer sur un axe du train de roulement sur rails (3) ou directement sur la surface de roulement de rails d'un rail (34) sur lequel roule le train de roulement sur rails (33), la zone d'extrémité supérieure (13) du châssis de mesure (5) étant reliée à un dispositif de mesure (17) pour la position en hauteur du fil de contact (18).

2. Machine selon la revendication 1, caractérisée en ce que la zone d'extrémité inférieure (8) du châssis de mesure (5) repose sur une plaque d'appui (10) horizontale et parallèle au plan de voie ferrée, respectivement, reliée au corps de boîte d'essieu (11).

3. Machine selon la revendication 1 ou 2, caractérisée en ce que des rouleaux (9) sont prévus à la zone d'extrémité inférieure (8) du châssis de mesure (5) en vue de l'appui sur la plaque d'appui (10).

4. Machine selon l'une des revendications 1, 2 ou 3, caractérisée en ce que le châssis de mesure (5) est constitué de deux tiges de guidage verticales (7) placées à une certaine distance l'une de l'autre dans la direction transversale de la machine et montées de façon déplaçable en hauteur qui sont constituées chacune de deux pièces reliées par un filetage (12).

5. Machine selon l'une des revendications 1 à 4, caractérisée en ce que les deux tiges de guidage verticales (7) du châssis de mesure (5) sont reliées dans leur zone d'extrémité supérieure (13) se situant à l'extérieur de la caisse de voiture (14) respectivement par une articulation (15) à un organe d'écartement (16) s'étendant transversalement et présentant le dispositif de mesure (17).

6. Machine selon l'une des revendications 1 à 5, caractérisée en ce que le dispositif de mesure (17) se trouvant dans la zone d'extrémité supérieure (13) du châssis de mesure (5) à l'extérieur de la caisse de voiture (14) et relié au châssis de mesure (5) présente une tige filetée verticale (21) reliée à un volant à main (23) et une échelle graduée de niveau (22), qui est reliée à une barre coulissante horizontale (24) et s'étendant transversalement à la direction longitudinale de la machine et pourvue d'une échelle graduée (25), et sur laquelle est monté de façon déplaçable un élément de retenue (26) avec une échelle graduée verticale de niveau (27).

7. Machine selon l'une des revendications 1 à 6, caractérisée en ce que pour constituer le dispositif de mesure (17 ; 49), un capteur de déplacement électronique (29), par exemple sous la forme d'un potentiomètre rotatif (50) ou analogue est disposé entre le châssis de mesure (5 ; 47) et l'étrier de mesure (28 ; 42), le cas échéant après avoir intercalé des isolateurs.

8. Machine selon la revendication 1, caractérisée en ce que le châssis de mesure (60) est relié entre les roues à boudin (68) du train de roulement sur rails (53) à un engrenage d'essieu (62) monté sur un essieu de roue (67) ou est disposé directement sur l'essieu de roue (67).

9. Machine selon la revendication 8, caractérisée en ce que l'extrémité inférieure du châssis de mesure (60) est reliée à l'engrenage d'essieu (62) autour d'un axe (69) s'étendant transversalement à la direction longitudinale de la machine.

10. Machine selon la revendication 8 ou 9, caractérisée en ce que l'extrémité supérieure du châssis de mesure (60) présentant une poutre de mesure (64) s'étendant parallèlement à l'essieu (67) et transversalement à la direction longitudinale de la machine est réalisée de façon déplaçable en hauteur par un dispositif d'entraînement (65) fixé sur celui-ci par rapport à l'extrémité inférieure (61) du châssis de mesure.

11. Machine selon l'une des revendications 8 à 10, caractérisée en ce que l'extrémité supérieure de la poutre de mesure (64) est reliée à une barre de mesure (76) qui est montée sur un premier côté longitudinal (77) de façon pivotante autour d'un axe (78) s'étendant parallèlement à l'essieu (67) et transversalement à la direction longitudinale de la machine et qui est reliée à un ressort cylindrique (79) pour pousser un deuxième côté longitudinal (80) de la barre de mesure (76) de la poutre de mesure (64).

12. Machine selon l'une des revendications 8 à 11, caractérisée en ce que le deuxième côté longitudinal (80) opposé à l'axe de la barre de mesure (76) est relié à un capteur de déplacement (81) fixé au dispositif d'entraînement (65).

13. Machine selon l'une des revendications 8 à 12, caractérisée en ce qu'un commutateur d'extrémité (83) est disposé entre la barre de mesure (76) et la poutre de mesure (64) et qui est réalisée pour la commande d'une vanne hydraulique (84) influençant le dispositif d'entraînement (65).

14. Machine selon l'une des revendications 8 à 13, caractérisée en ce que la poutre de mesure (64) est reliée à au moins une tige de guidage (74) s'étendant parallèlement à l'axe longitudinal (71) du dispositif d'entraînement (65), et qui est montée de façon déplaçable en hauteur dans un bloc de guidage (75) relié au vérin hydraulique (72) du dispositif d'entraînement (65).

15. Machine selon l'une des revendications 8 à 14, caractérisée en ce qu'on fait passer le châssis de mesure (60) à travers une ouverture (85) du châssis de machine (54) qui présente deux barres de guidage (86) parallèles l'une à l'autre et s'étendant transversalement à la direction longitudinale de la machine pour l'application sans jeu du châssis de mesure (60), la largeur de l'ouverture (85) s'étendant transversalement à la direction longitudinale de la machine étant réalisée plus grande que la largeur correspondante du châssis de mesure (60).

16. Machine selon l'une des revendications 8 à 15, caractérisée en ce que la poutre de mesure (64) est reliée à une barre de mesure de niveau (88) s'étendant perpendiculairemet à l'essieu (67), présentant une graduation de longueur.

17. Machine selon l'une des revendications 14 à 16, caractérisée en ce que le châssis de mesure (89) est reliée dans sa zone d'extrémité inférieure à des roues à boudin (90) pour l'application sur les rails (91) d'une voie ferrée sur laquelle se déplacent les trains de roulement sur rails de la machine.
